# EUROPEAN PATENT APPLICATION

(11) **EP 3 296 857 A1**
(43) Date of publication of application: **21.03.2018**
(21) Application number: 17191124.1
(22) Date of filing: 14.09.2017
(51) Int. Cl.: G06F 3/12

(54) **CLIENT TERMINAL, INFORMATION PROCESSING METHOD, AND CARRIER MEANS**

(30) Priority: 16.09.2016 JP 2016182143; 18.07.2017 JP 2017139289
(71) Applicant: Ricoh Company Ltd., Ohta-ku Tokyo 143-8555 (JP)
(72) Inventor: TAKIGAWA, Minako, Tokyo, 143-8555 (JP)
(74) Representative: Schwabe - Sandmair - Marx

(57) **Abstract**

A client terminal (10) used by at least one user, includes: a storage device (130) configured to store at least one print job; and a processor (11) configured to execute a service process (101) during when the client terminal (10) is operating regardless of a login state of the user. The service process (101) includes: a print job request receiver (113) configured to receive, from an output apparatus (20), a print job request requesting a print job; and a print job sender (116) configured to send the output apparatus (20) the print job stored in the storage device (130) in response to the print job request received by the print job request receiver (113).

## Description

### BACKGROUND OF THE INVENTION

### Field of the Invention

The present invention relates to a client terminal, an information processing method, and carrier means such as a recording medium.

### Description of the Related Art

In known pull printing systems, a print job is sent from a client personal computer (PC) to a print server, which is then stored in a storage area of the print server. The print job stored in the print server is sent to an output apparatus (image forming apparatus or the like) according to a print instruction from an operation terminal operated by a user, and the output apparatus executes the print job.

Instead of storing the print job in the print server, the client PC can specify a storage area of the client PC to store the print job. A client pull printing system is of another known type in which the output apparatus acquires a stored print job from the client PC and outputs the print job.

According to the configuration disclosed by JP-5677047-B, for example, when information for specifying a client PC which stores a print job is entered by a user in a printing apparatus, the printing apparatus converts the entered information into an IP address to communicate with the client PC specified by the IP address and not to communicate with unnecessary client PCs.

However, there is a disadvantage in the related art that when the user logs off the client PC (state where the login state is not maintained), the user's print job cannot be taken out from the client PC that stores print jobs for each user.

### SUMMARY OF THE INVENTION

In view of the above, one object of the present invention is to provide a client terminal, an information processing method, and carrier means such as a recording medium, each of which enables one or more print jobs stored by a user in a login state to be taken out irrespective of the login state of the user.

In one aspect of the present invention, a client terminal used by at least one user, includes: a storage device (130) configured to store at least one print job; and a processor (11) configured to execute a service process (101) during when the client terminal (10) is operating regardless of a login state of the user. The service process (101) includes: a print job request receiver (113) configured to receive, from an output apparatus (20), a print job request requesting a print job; and a print job sender (116) configured to send the output apparatus (20) the print job stored in the storage device (130) in response to the print job request received by the print job request receiver (113).

Accordingly, one or more print jobs stored by a user can be taken out irrespective of the login state of the user.

### BRIEF DESCRIPTION OF THE SEVERAL VIEWS OF THE DRAWINGS

A more complete appreciation of the disclosure and many of the attendant advantages and features thereof can be readily obtained and understood from the following detailed description with reference to the accompanying drawings, wherein:
FIG. 1 is a diagram illustrating an exemplary configuration of an information processing system;
FIG. 2 is a diagram illustrating an exemplary hardware configuration of a client terminal;
FIG. 3 is a diagram illustrating exemplary functions of the client terminal;
FIG. 4 is a diagram illustrating exemplary print job information;
FIG. 5 is a diagram illustrating another exemplary print job information;
FIG. 6 is a flowchart illustrating an exemplary operation of the client terminal;
FIG. 7 is a sequence diagram illustrating an exemplary operation procedure of the information processing system;
FIG. 8 is a diagram illustrating an exemplary configuration of an information processing system according to a modified embodiment;
FIG. 9 is a diagram illustrating exemplary association information; and
FIG. 10 is a sequence diagram illustrating an exemplary operation procedure of the information processing system according to the modified embodiment.

The accompanying drawings are intended to depict embodiments of the present invention and should not be interpreted to limit the scope thereof. The accompanying drawings are not to be considered as drawn to scale unless explicitly noted.

### DETAILED DESCRIPTION OF THE INVENTION

The terminology used herein is for the purpose of describing particular embodiments only and is not intended to be limiting of the present invention. As used herein, the singular forms "a", "an" and "the" are intended to include the plural forms as well, unless the context clearly indicates otherwise.

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

Referring now to the accompanying drawings, a client terminal, an information processing method, and a storage medium according to an embodiment of the present invention will be described in detail.

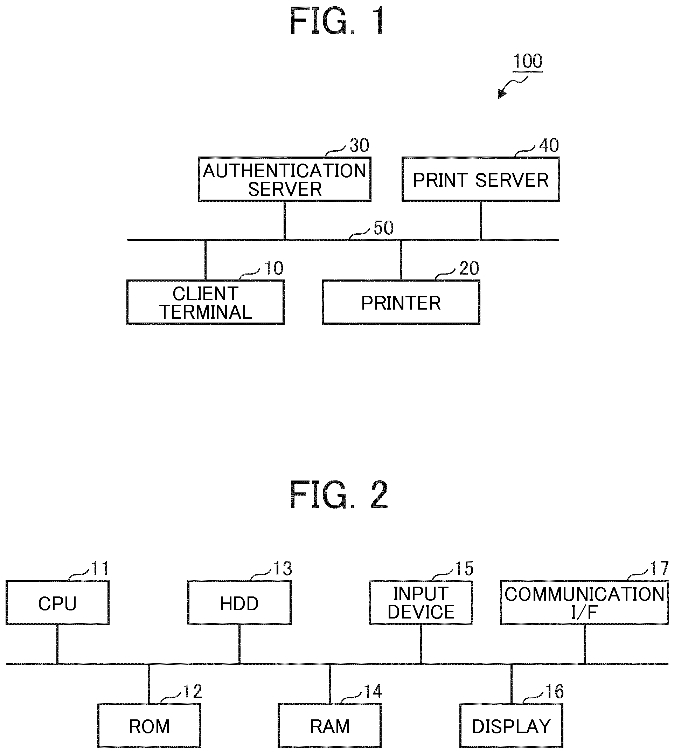

FIG. 1 is a diagram illustrating an exemplary configuration of an information processing system 100 according to the present embodiment. As illustrated in FIG. 1, the information processing system 100 includes a client terminal 10, a printer 20, an authentication server 30, and a print server 40, which are connected via a network 50 such as the Internet, for example. These apparatuses may be connected by wire or wirelessly. As an assumption, the information processing system 100 according to the present embodiment is a system which implements at least client pull printing; that is, the client terminal 10 stores a print job and the printer 20 outputs the print job stored in the client terminal 10 according to a user's print instruction. Further, the system may also implement server pull printing; that is, the print server 40 stores a print job sent from the client terminal 10, and the printer 20 outputs the print job stored in the print server 40. For example, when a user stores a print job at the client terminal 10, the system may allow the user to select either the client terminal 10 or the print server 40 to store the print job, or the system may allow the client terminal 10 to dynamically select the client terminal 10 or the print server 40 depending on the contents of the print job and cause the selected one to store the print job.

In the configuration exemplified in FIG. 1, the information processing system 100 includes the client terminal 10 and the printer 20, one of each for the sake of convenience. However, the present invention is not limited to this configuration, and the number of these apparatuses can be changed as desired. For example, a single server in which the authentication server 30 and the print server 40 are integrated may be provided.

The client terminal 10 is a terminal used by one or more users. For example, each user can use the client terminal 10 for the user's work, tasks, or any other assignments. The client terminal 10 includes a personal computer (PC), for example. The client terminal 10 may be used by a single user or the client terminal 10 may be assumed to be shared by a plurality of users. The specific configuration of the client terminal 10 will be described later.

The printer 20 is an example of an "output apparatus", and is an apparatus that outputs a print job stored in the client terminal 10 or the print server 40. Although the printer 20 is described as an example of the output apparatus, the output apparatus is not limited to the printer 20 and the type of the output apparatus is arbitrary. Examples of the output apparatus may include not only an image forming apparatus such as a multifunction peripheral (MFP), a copying machine, a scanner, or a laser printer (LP) but also an apparatus that performs display outputs such as a projector, for example.

The authentication server 30 is a server for authenticating users and the printer 20. More specifically, the authentication server 30 executes authentication processing (user authentication processing) for determining whether a user has the authority to use the printer 20. In this example, the authentication server 30 preliminarily stores user authentication information for each user who has the authority to use the printer 20. The user authentication information is used to authenticate the user. In this example, the user authentication information is a user identification (ID) uniquely assigned to each user, but the user authentication information is not limited to the user ID. For example, the user authentication information may be a combination of a user name and a password. Further, the authentication server 30 executes authentication processing (apparatus authentication processing) for determining whether the printer 20 is an apparatus permitted to be used in the information processing system 100. In this example, the authentication server 30 preliminarily stores the apparatus authentication information for each apparatus permitted to be used in the information processing system 100. The apparatus authentication information is used to authenticate the apparatus. In this example, the apparatus authentication information is an apparatus ID for identifying the apparatus, but the apparatus authentication information is not limited to the apparatus ID.

The print server 40 manages information (hereinafter referred to as "location information") indicating which user's print job is stored in which client terminal 10. The print server 40 may also have a function of storing print jobs sent from the client terminal 10. The print server 40 manages print jobs sent from a plurality of client terminals 10 and pieces of information relating to the print jobs. Since a print job includes information for identifying a user such as a user ID, the print server 40 can associate the print job with the user ID to manage the user who can execute the print job. The specific operation of the print server 40 in the present embodiment will be described later. Although the system according to the present embodiment can operate even when the server pull printing and the client pull printing coexist, the present embodiment is described based on an example in which the client pull printing is used.

The specific configuration of the client terminal 10 will now be described. FIG. 2 is a diagram illustrating an exemplary hardware configuration of the client terminal 10. As illustrated in FIG. 2, the client terminal 10 includes a central processing unit (CPU) 11, a read-only memory (ROM) 12, a hard disk drive (HDD) 13, a random-access memory (RAM) 14, an input device 15, a display 16, and a communication interface (I/F) 17. The printer 20, the authentication server 30, and the print server 40 also include equivalent hardware.

The CPU 11 is an arithmetic unit that reads programs and data from a storage device such as the ROM 12 and the HDD 13 to the RAM 14 and executes processing to control the entire client terminal 10 and perform various functions.

The ROM 12 is an example of a nonvolatile semiconductor memory (storage device) capable of retaining programs and data even after the power is turned off (even after the power supply to the client terminal 10 is cut off). The ROM 12 stores programs and data such as a basic input/output system (BIOS) which is executed when the client terminal 10 is activated, operating system (OS) settings, and network settings, for example.

The HDD 13 is an example of a nonvolatile storage device that stores programs and data. The HDD 13 includes an OS and an application software, for example. The OS is basic software for controlling the entire client terminal 10. The application software provides various functions on the OS (hereinafter simply referred to as "application"). Instead of the HDD 13, the client terminal 10 may use a drive device (e.g., a solid-state drive: SSD) that uses a flash memory as a storage medium.

The RAM 14 is an example of a volatile storage device that temporarily stores programs and data, and functions as a work area for processing executed by the CPU 11.

The input device 15 is a device used by a user to enter various operation signals. The input device 15 can include a keyboard, a mouse, and a touch panel, for example. The display 16 is a device for displaying various kinds of information (e.g., results of processing performed by the client terminal 10), and may include a liquid crystal display device, for example. Like a touch panel, the input device 15 and the display 16 may be provided integrally, for example. Further, the input device 15 and the display 16 may be connected when necessary.

The communication I/F 17 is an interface for connecting the client terminal 10 to the network 50.

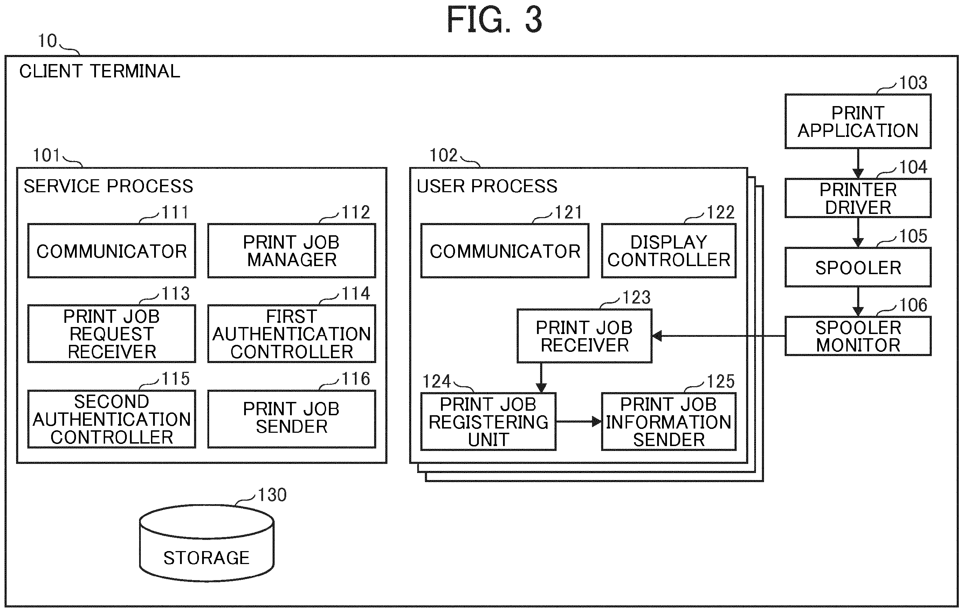

FIG. 3 is a diagram illustrating exemplary functions included in the client terminal 10. In this example, the client terminal 10 at least includes a service process 101 and a plurality of user processes 102 as programs that operate on the OS of the client terminal 10. The service process 101 operates as a service which is common to the system (continues operating while the client terminal 10 is running) regardless of the login state of the user (regardless of whether the user who has been authenticated and logged in exists). The user processes 102 correspond one-to-one to accounts of a plurality of users who have the authority to use the client terminal 10. Each of the user processes 102 operates during a session of the corresponding user. The account is information for using the client terminal 10 (information used for login). The account may include the above-described user ID or may include a combination of a user name (account name) and a password. Each user process 102 is activated at the time when the corresponding user is authenticated and logs in, and is terminated at the same time as the user logs off. In other words, each user process 102 operates while the corresponding user logs in, and is terminated (does not operate) when the user logs off. The term "login" indicates a state where the presence of the user account has been confirmed (authenticated) and the usage of the client terminal 10 has been permitted. The term "logoff' indicates a state where the user has finished using the client terminal 10 (state where the authority to use the client terminal 10 is relinquished or the state where the login state is not maintained). The OS manages login or logoff of the user, and the corresponding user process 102 is activated or terminated according to the instructions of the OS.

Other programs operating on the OS include a print application 103, a printer driver 104, a spooler 105, and a spooler monitor 106, for example. In this example, the print application 103 includes a function of creating original data (data to be a source of a print job) such as document data, a function of displaying a print setting screen, and a function of receiving an instruction to print the original data from the print setting screen according to the user's operations. In this example, when the user instructs printing of the original data from the print setting screen, the user specifies not only the original data to be printed but also a printer icon (a printer registered in the client terminal 10) to which a port for the pull printing is set. In other words, the print instruction at least includes the specification of original data to be printed and the specification of the printer icon. In the client terminal 10, a plurality of printer icons for specifying printing destinations are created (registered), and the corresponding printer driver 104 and port serving as the setting values are set accordingly. In this example, the printer driver 104 exists for each printer icon. When the print application 103 receives a print instruction from the print setting screen, the print application 103 sends a print request to the printer driver 104 corresponding to the printer icon specified by the received print instruction. The print request includes original data specified by the print instruction and requests printing of the original data.

The printer driver 104 provides a function of generating a print job. When the printer driver 104 receives a print request from the print application 103, the printer driver 104 generates a print job on the basis of the print request, and passes the print job to the spooler 105. The spooler 105 provides a function of temporarily storing print jobs generated by the printer driver 104 and sequentially executing the print jobs. The spooler monitor 106 monitors the print jobs being stored in the spooler 105. In this example, the spooler monitor 106 checks a parameter (set port) of a print job being stored in the spooler 105, and determines whether the output destination of the print job is the printer 20 used by the client pull printing system (the information processing system 100). In this way, the spooler monitor 106 can determine whether the print job is a job for the client pull printing system. When the print job is determined to be a job for the client pull printing system, the spooler monitor 106 takes out the print job from the spooler 105 and passes the print job to the user process 102.

As illustrated in FIG. 3, the service process 101 includes a communicator 111, a print job manager 112, a print job request receiver 113, a first authentication controller 114, a second authentication controller 115, and a print job sender 116. In this example, although the functions relating to the present embodiment are mainly exemplified, the functions included in the service process 101 are not limited to these functions.

The communicator 111 performs data communication with the outside. The print job manager 112 manages print jobs stored in a storage 130 included in the client terminal 10. In this example, the print job manager 112 stores the print jobs in the storage 130 according to a request from the user process 102 to be described later. In this example, the print job manager 112 also has a function of generating and sending a print job list to be described later (to the printer 20). The storage 130 can store print jobs for each of one or more users authorized to use the client terminal 10. For example, the storage 130 may associate one or more print jobs with the corresponding user information (e.g., user ID) indicating a user and store the print job(s).

The print job request receiver 113 receives a print job request that requests a print job from the printer 20. The print job request includes first information used for user authentication and second information used for authentication of the printer 20. Details will be described later. The first information is information acquired by encrypting user information (user ID in this example) indicating a user with a predetermined encryption key. The first information may be hereinafter referred to as "token for the user". The second information is information acquired by encrypting an apparatus ID (an example of "output apparatus information") for identifying a printer with a predetermined encryption key. The second information may be hereinafter referred to as "token for the apparatus".

When the print job request receiver 113 receives the print job request from the printer 20, the print job request receiver 113 passes the first information included in the print job request received to the first authentication controller 114 to be described later to request authentication of the user. Further, the print job request receiver 113 passes the second information included in the print job request received to the second authentication controller 115 to be described later to request authentication of the printer 20.

The first authentication controller 114 uses the first information included in the print job request received by the print job request receiver 113 to perform control for authenticating the user. In the present embodiment, the first authentication controller 114 sends the authentication server 30 a first authentication request including the first information passed from the print job request receiver 113 and requesting the authentication of the user. The first authentication controller 114 then receives the authentication result of the user from the authentication server 30 as the response to the first authentication request. The first authentication controller 114 passes the authentication result received from the authentication server 30 to the print job request receiver 113. The authentication server 30 decrypts the first information (the token for the user) included in the first authentication request to acquire the user ID, and executes the user authentication processing for determining whether the decrypted user ID is included in the above-described user authentication information (information used to authenticate the user) which is preliminarily stored. The authentication server 30 then returns the authentication result to the client terminal 10 (the first authentication controller 114). The authentication server 30 manages the encryption key for generating the token for the user.

The second authentication controller 115 uses the second information included in the print job request received by the print job request receiver 113 to perform control for authenticating the printer 20. In the present embodiment, the second authentication controller 115 sends the authentication server 30 a second authentication request including the second information passed from the print job request receiver 113 and requesting the authentication of the printer 20. The second authentication controller 115 then receives the authentication result of the printer 20 from the authentication server 30 as the response to the second authentication request. The authentication server 30 decrypts the second information (the token for the apparatus) included in the second authentication request to acquire the apparatus ID, and executes the apparatus authentication processing for determining whether the decrypted apparatus ID is included in the above-described apparatus authentication information (information used to authenticate the apparatus) which is preliminarily stored. The authentication server 30 then returns the authentication result to the client terminal 10 (the second authentication controller 115). The second authentication controller 115 passes the authentication result received from the authentication server 30 to the print job request receiver 113. The authentication server 30 manages the encryption key for generating the token for the apparatus.

When the print job request receiver 113 receives, from the first authentication controller 114, the authentication result indicating that the user has been authenticated and also receives, from the second authentication controller 115, the authentication result indicating that the printer 20 has been authenticated, the print job request receiver 113 passes the print job request received from the printer 20 to the print job manager 112. The print job manager 112 takes out the print job stored in the storage 130 according to the print job request passed from the print job request receiver 113, and requests the print job sender 116 to send the print job taken out. The print job sender 116 which has received this request sends the printer 20 the print job passed from the print job manager 112.

In other words, in the present embodiment, when the user has been authenticated by the first authentication controller 114 and the printer 20 has been authenticated by the second authentication controller 115, the print job sender 116 sends the print job corresponding to the print job request.

The functions of the user processes 102 will now be described. Although one of the user processes 102 is focused here to describe the functions of the user process 102, the other user processes 102 also have similar functions.

As illustrated in FIG. 3, the user process 102 includes a communicator 121, a display controller 122, a print job receiver 123, a print job registering unit 124, and a print job information sender 125. In this example, although the functions relating to the present embodiment are mainly exemplified, the functions included in the user process 102 are not limited to these functions.

The communicator 121 performs data communication with the outside. The display controller 122 performs control of displaying, on the display 16, various kinds of information about the client terminal 10. In this example, when the user process 102 is activated, the display controller 122 can perform control of displaying, on the display 16, the screen (screen after login) on which the user's personal settings are reflected.

The print job receiver 123 is called by the spooler monitor 106 and receives a print job from the spooler monitor 106. The print job receiver 123 passes the print job received from the spooler monitor 106 to the print job registering unit 124.

The print job registering unit 124 adds user information and bibliographic information including a job name and print setting information such as the number of copies to the print job received by the print job receiver 123, and requests the service process 101 (the print job manager 112) to register the information. The print job manager 112 registers (stores) the information including the print job (information including the print job to which the bibliographic information is added) in the storage 130 according to the request from the print job registering unit 124. The print job registering unit 124 also passes the information including the print job to be registered (information including the print job to which the bibliographic information is added) to the print job information sender 125. In other words, the user process 102 requests the service process 101 to store the print job and receives the result, through which the user process 102 can recognize that the print job has been stored.

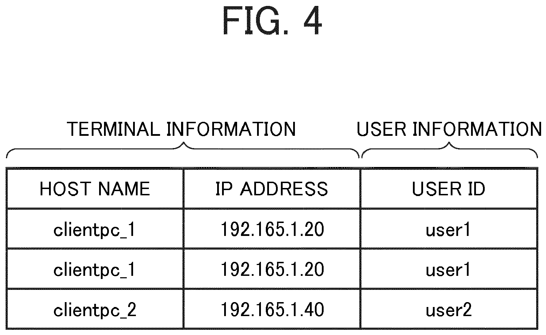

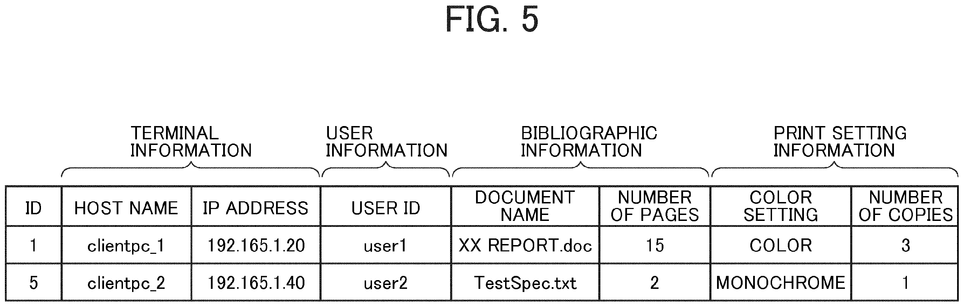

The print job information sender 125 generates print job information indicating information on the print job on the basis of the information passed from the print job registering unit 124, and sends the print server 40 the generated print job information. As illustrated in FIG. 4, the print job information just needs to at least include user information (in this example, user ID) and terminal information (in this example, a host name and an IP address). The user information indicates the user who has stored the print job. The terminal information indicates the client terminal 10 in which the print job is stored. However, without limiting to this information, the print job information may include the user information, the terminal information, and the bibliographic information other than print data (image data to be printed) included in the print job, for example, as illustrated in FIG. 5. The print server 40 manages the print job information received from the client terminal 10 as location information.

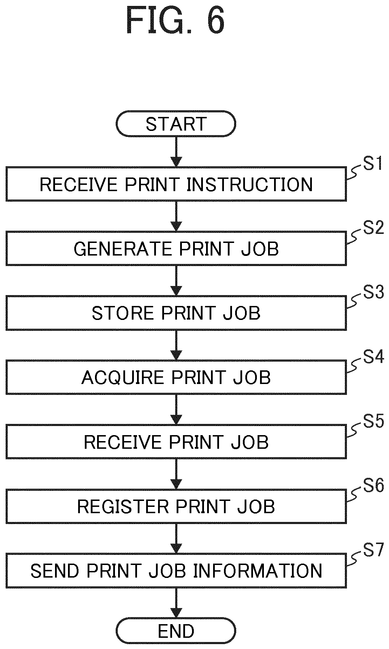

FIG. 6 is a flowchart illustrating an exemplary operation of the client terminal 10 from generation to storage of a print job. As an assumption, when a user enters the user's account and logs in to the client terminal 10, the user process 102 which operates during a session of this user is activated. As a screen after login, a screen reflecting the user's personal settings is displayed, and the user activates the print application 103 and creates original data of the print job on the screen. Then, the user instructs printing of the created original data. As described above, when the user instructs printing of the original data, the user specifies not only the original data to be printed but also specifies the printer icon to which the port for the client pull printing (client pull printing system) is set.

As illustrated in FIG. 6, when the print application 103 receives a print instruction from the user (step S1), the print application 103 sends a print request to the printer driver 104 corresponding to the printer icon specified by the received print instruction. The print request includes the original data specified by the print instruction and requests printing of the original data Subsequently, the printer driver 104 generates a print job on the basis of the print request passed from the print application 103 (step S2), and passes the generated print job to the spooler 105. The spooler 105 stores (temporarily saves) the print job received from the printer driver 104 (step S3).

The spooler monitor 106 monitors the print job being registered on the spooler 105. When the print job of the client pull printing is registered, the spooler monitor 106 acquires the print job from the spooler 105 (step S4) and passes the print job to the running user process 102 (the print job receiver 123). As described above, the spooler monitor 106 checks the parameter (port) of the print job stored in the spooler 105, and determines whether the output destination of the print job is the printer 20 used by the client pull printing system (the information processing system 100). In this way, the spooler monitor 106 can determine whether the print job is for the client pull printing system.

The print job receiver 123 receives the print job from the spooler monitor 106 (step S5). The print job receiver 123 passes the print job received in step S5 to the print job registering unit 124. The print job registering unit 124 adds user information and bibliographic information including a job name and print setting information such as the number of copies to the print job passed from the print job receiver 123, and requests the service process 101 (the print job manager 112) to register the information. The print job manager 112 adds an ID for identifying the print job to the print job (print job to which the bibliographic information is added) passed from the print job registering unit 124, and registers (stores) the print job in the storage 130 (step S6). The print job can be stored as a file or can be stored using a database (DB).

Then, the print job manager 112 passes the storage result in step S6 to the running user process 102 (the print job information sender 125). In other words, the user process 102 requests the service process 101 to store the print job and receives the result, through which the user process 102 can recognize that the storage of the print job has been completed. When the storage of the print job has been completed, the running user process 102 (the print job information sender 125) generates the above-described print job information and sends the print server 40 the generated print job information (step S7). The specific contents of the print job information are as described above. The print server 40 stores the print job information received from the client terminal 10.

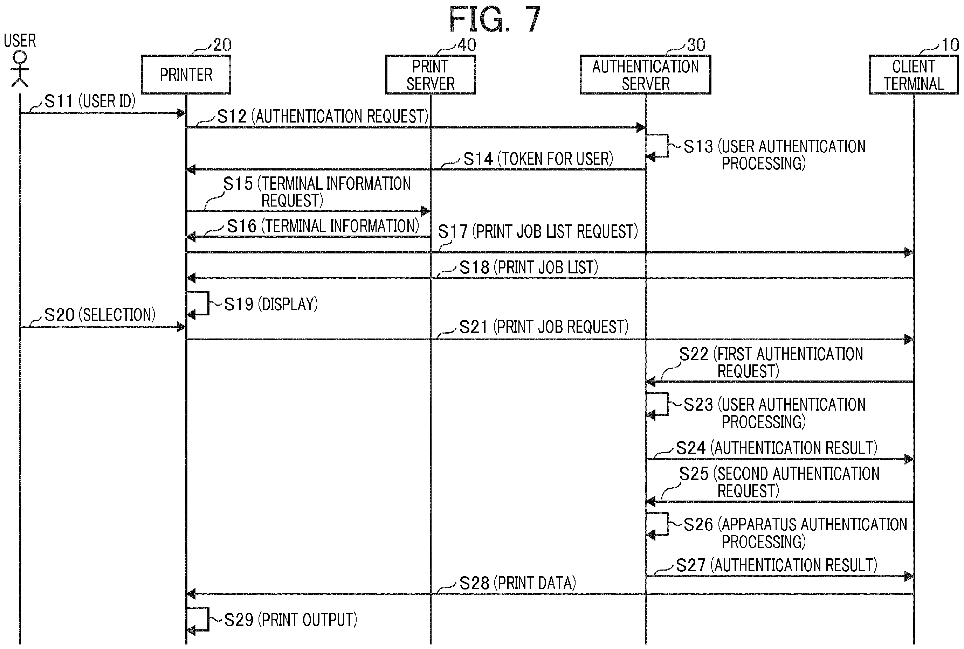

FIG. 7 is a sequence diagram illustrating an exemplary operation procedure of the information processing system 100 when the printer 20 receives the print job from the client terminal 10 and outputs the print job. For the sake of convenience, it is assumed that the printer 20 has been authenticated by the authentication server 30 and has already acquired the token for the apparatus from the authentication server 30.

The user who has completed the operation of storing the print job in the client terminal 10 enters the user ID in the printer 20 to cause the printer 20 to authenticate (log in) the user (step S11). At this time, the user may have logged off from the client terminal 10 (i.e., the user process 102 corresponding to the user is terminated) or another user may have logged in to the client terminal 10. The method of entering the user ID is arbitrary. For example, the user ID may be entered by operating a keyboard or the like, by reading an IC card in which the user ID is recorded, or by using biometric authentication.

The printer 20 which has received the entry of the user ID sends the authentication server 30 a user authentication request including the received user ID and requesting execution of the authentication processing for the user (step S12). The authentication server 30 which has received the user authentication request executes the user authentication processing (step S13). More specifically, the authentication server 30 determines whether the user authentication information matching the user ID included in the user authentication request exists in the user authentication information preliminarily stored. In the following description, for the sake of convenience, it is assumed that the result of the user authentication processing in step S13 is positive (i.e., the user authentication information that matches the user ID included in the user authentication request exists in the user authentication information preliminarily stored). In this case, the authentication server 30 encrypts the user ID included in the user authentication request with the predetermined encryption key, issues a token for the user, and returns the issued token for the user to the printer 20 (step S14).

Subsequently, the printer 20 acquires a print job list. In the example described here, the print server 40 manages the print job information (information not including bibliographic information) illustrated in FIG. 4. In this case, the printer 20 sends the print server 40 a terminal information request including the user ID of the currently logged-in user and requesting the above-described terminal information (step S15). The print server 40 which has received the terminal information request refers to the print job information illustrated in FIG. 4, selects the terminal information (in this example, a host name and an IP address) corresponding to the user ID included in the terminal information request, and returns the selected terminal information to the printer 20 (step S16).

Subsequently, the printer 20 sends a print job list request to the client terminal 10 specified by the terminal information received from the print server 40. The print job list request includes the user ID of the currently logged-in user and requests a print job list showing a list of print jobs (step S17). The service process 101 (the print job manager 112) of the client terminal 10 which has received the print job list request generates the print job list showing a list of one or more print jobs (in this example, the list of bibliographic information of the print job(s)) corresponding to the user ID included in the print job list request, and returns the generated print job list to the printer 20 (step S18). The printer 20 displays the print job list received from the client terminal 10 (step S19).

Unlike the above, when the print server 40 manages the print job information (information including the bibliographic information) illustrated in FIG. 5, for example, the printer 20 can send the print server 40 the above-described print job list request and receive the print job list from the print server 40 as the response. At this time, the print server 40 sends, together with the print job list, the terminal information of the client terminal 10 which stores one or more print jobs shown in the print job list.

Subsequently, the user selects a print job to be outputted (more specifically, selects bibliographic information of the print job) from the print job list displayed on the printer 20 (step S20). The printer 20 which has received this operation sends the print job request to the client terminal 10 storing the print job (step S21). The print job request includes the token for the apparatus acquired from the authentication server 30 and the token for the user acquired in step S14 and requests the print job selected in step S20 (more specifically, requests print data corresponding to the bibliographic information selected in step S20).

The service process 101 (the print job request receiver 113) of the client terminal 10 receives the above-described print job request. Then, the service process 101 (the first authentication controller 114) sends the authentication server 30 the above-described first authentication request (step S22). The first authentication request includes the token for the user included in the received print job request and requests the authentication of the user. The authentication server 30 which has received the first authentication request decrypts the token for the user included in the first authentication request to acquire the user ID, and executes the user authentication processing for determining whether the decrypted user ID is included in the above-described user authentication information (information to be used for authenticating the user) which is preliminarily stored (step S23). The authentication server 30 then returns the authentication result to the service process 101 (the first authentication controller 114) of the client terminal 10 (step S24). For the sake of convenience, the authentication result in step S23 is positive in the example described below.

Then, the service process 101 (the second authentication controller 115) of the client terminal 10 sends the authentication server 30 the above-described second authentication request (step S25). The second authentication request includes the token for the apparatus included in the received print job request and requests the authentication of the printer 20. The authentication server 30 which has received the second authentication request decrypts the token for the apparatus included in the second authentication request to acquire the apparatus ID, and executes the apparatus authentication processing for determining whether the decrypted apparatus ID is included in the above-described apparatus authentication information (information used to authenticate the printer 20) which is preliminarily stored (step S26). The authentication server 30 then returns the authentication result to the service process 101 (the second authentication controller 115) of the client terminal 10 (step S27). For the sake of convenience, the authentication result in step S26 is positive in the example described below.

Subsequently, the service process 101 (the print job sender 116) of the client terminal 10 takes out data of the print job (print data) stored in the storage 130 according to the print job request received in step S21 and sends the printer 20 the print data taken out (step S28). Here, the "sending of the print data" is assumed to be included in the concept of "sending of the print job". Then, the printer 20 performs print output based on the print data received from the client terminal 10 (step S29).

When the authentication result in step S23 described above or the authentication result in step S26 described above is negative, the service process 101 of the client terminal 10 returns the response indicating an authentication error without returning the print job (print data) as the response to the print job request which has received from the printer 20. The printer 20 which has received the response indicating the authentication error as the response to the print job request can display an error screen indicating that printing cannot be executed.

As described above, in the present embodiment, the service process 101 which continues operating while the client terminal 10 is running includes a function (the print job request receiver 113) of receiving the above-described print job request from the printer 20 and a function (the print job manager 112 and the print job sender 116) of sending the printer 20 the print job stored in the storage 130 that stores print jobs in response to the received print job request, regardless of the login state of the user. Accordingly, even when the login state of the user who operates the printer 20 is not maintained (logoff state) and the user process 102 is not activated, it is possible to take out the print job which has been stored in the client terminal 10 during the user login.

Although the embodiment according to the present invention has been described above, the embodiment does not limit the present invention. In an implementation stage, the present invention may be embodied by modifying constituent elements without departing from the scope of the present invention. Suitable combinations of the plurality of constituent elements disclosed in the embodiment above can form various inventions. For example, some of the constituent elements may be removed from all the constituent elements described in the embodiment.

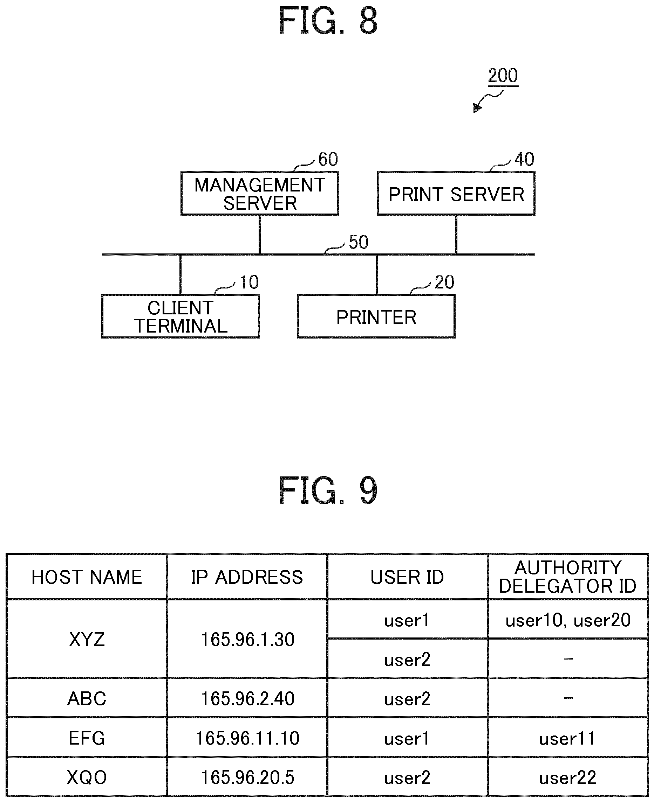

For example, the print server 40 may request the print job list from the client terminal 10 and pass the print job list to the printer 20. FIG. 8 is a diagram illustrating an exemplary configuration of an information processing system 200 according to the present modification. As illustrated in FIG. 8, the information processing system 200 is different from the above-described embodiment in that the information processing system 200 includes a management server 60.

The management server 60 is a server that manages a plurality of print servers 40 and that also performs the above-described authentication. The management server 60 also stores (manages) association information in which the above-described terminal information and the user ID are associated with each other. FIG. 9 is an example of the association information. The association information in this example is information in which a user ID and an authority delegator ID are associated with each other for each piece of terminal information. The terminal information is a combination of a host name and an IP address. The authority delegator ID is information for identifying the user who has the authority to instruct execution of a print job (stored print job) belonging to the user identified by the user ID associated with the authority delegator ID. The form of the association information is arbitrary, and is not limited to the example in FIG. 9. For example, the association information may not include the authority delegator ID. In short, the association information just needs to be information in which, at least, the terminal information and the user ID are associated with each other. The management server 60 preliminarily stores the above-described user authentication information for each user who has the authority to use the printer 20. The user authentication information is any information to be used for authenticating the user.

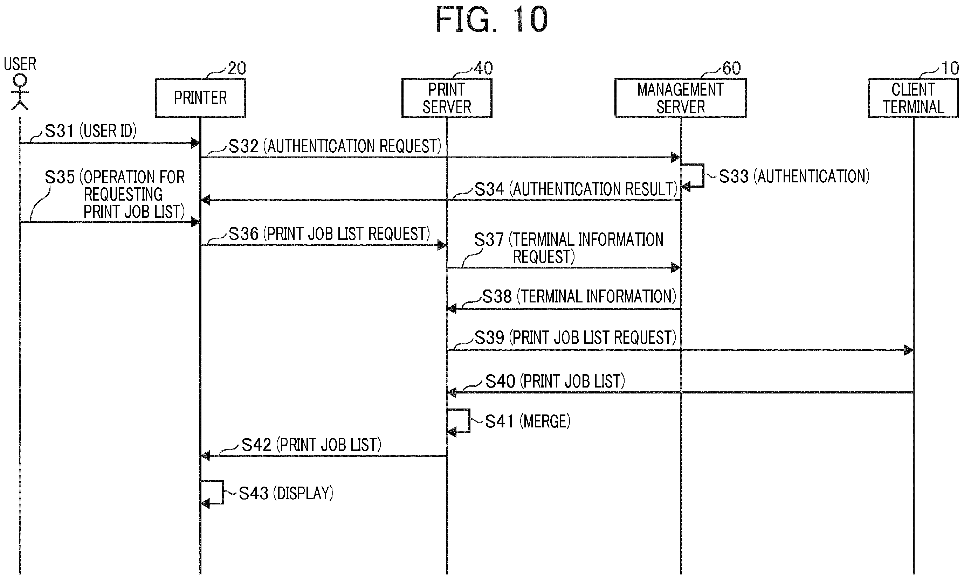

FIG. 10 is a sequence diagram illustrating an exemplary operation procedure of the information processing system 200 until the printer 20 acquires and displays a print job list. The user enters the user ID in the printer 20 to cause the printer 20 to authenticate (log in) the user (step S31). The printer 20 which has received the entry of the user ID sends the management server 60 a user authentication request including the received user ID and requesting execution of authentication processing for the user (step S32).

The management server 60 which has received the user authentication request executes the user authentication processing (step S33). More specifically, the management server 60 determines whether the user authentication information matching the user ID included in the user authentication request exists in the user authentication information preliminarily stored. In the following description, for the sake of convenience, it is assumed that the result of the user authentication processing in step S33 is positive. In this case, the management server 60 sends the printer 20 an authentication result indicating that the user has been authenticated (step S34). Similar to the authentication server 30, the management server 60 can encrypt the user ID included in the user authentication request with a predetermined encryption key and issue a token for the user. The above-described authentication result may include the issued token for the user.

After step S34, the logged-in user performs an operation for requesting a print job list from the printer 20 which has been given permission for use (step S35). The printer 20 which has received this operation sends the print server 40 a print job list request including the user ID of the currently logged-in user and requesting the print job list (step S36).

The print server 40 which has received the print job list request from the printer 20 sends the management server 60 a terminal information request. The terminal information request includes the user ID included in the print job list request and requests the above-described terminal information (step S37). The management server 60 which has received the terminal information request refers to the association information illustrated in FIG. 9, selects one or more pieces of terminal information (in this example, a host name and an IP address) corresponding to the user ID included in the terminal information request, and returns the selected one or more pieces of terminal information to the print server 40 (step S38). As an example, it is assumed that the association information is in the form of FIG. 9 and the user ID included in the terminal information request is "User1". In this case, two pieces of terminal information (terminal information represented by a combination of host name "XYZ" and IP address "165.96.1.30" and terminal information represented by a combination of host name "EFG" and IP address "165.96.11.10") associated with the "User1" are selected and sent to the print server 40.

Subsequently, the print server 40 sends the print job list request to the client terminal 10 specified by the terminal information received from the management server 60. The print job list request includes the user ID of the currently logged-in user and requests the print job list showing a list of print jobs (step S40). The service process 101 (the print job manager 112) of the client terminal 10 which has received the print job list request generates the print job list and returns the generated print job list to the print server 40 (step S39). The print job list shows a list of one or more print jobs (in this example, a list of bibliographic information of the print job(s)) corresponding to the user ID included in the print job list request. In this way, the print server 40 can acquire the corresponding print job list for each of one or more pieces of terminal information received from the management server 60, and merges the print job lists (step S41). Further, the print server 40 can, for example, rearrange the pieces of bibliographic information of the print jobs in descending order or ascending order according to a sort key such as the order of dates or the names of the print jobs. This sort key may be included in the print job list request issued in step S36 above, for example.

The print server 40 sends the printer 20 the print job list acquired by the merge in step S41 above as the response to the print job list request received in step S36 above (step S42). The printer 20 which has received the print job list from the print server 40 displays the received print job list (step S43). When one of the print jobs is selected from the print job list, the printer 20 acquires output data from the client terminal 10 corresponding to the selected print job.

In the present modification, although the management server 60 performs authentication, the present invention is not limited to this configuration. Similar to the above-described embodiment, for example, the authentication server 30 may be provided and the processing relating to the authentication may be performed by the authentication server 30.

The programs to be executed by the apparatuses (the client terminal 10, the printer 20, the authentication server 30, and the print server 40) included in the information processing system 100 may be recorded and provided as files in an installable or executable form in a computer-readable recording medium such as a compact disk read-only memory (CD-ROM), a flexible disk (FD), a compact disc-recordable (CD-R), a digital versatile disk (DVD), or a universal serial bus (USB) or may be provided or distributed via the network such as the Internet. Further, various programs may be preinstalled into a ROM or the like to provide the programs.

The above-described embodiments are illustrative and do not limit the present invention. Thus, numerous additional modifications and variations are possible in light of the above teachings. For example, elements and/or features of different illustrative embodiments may be combined with each other and/or substituted for each other within the scope of the present invention.

The present invention can be implemented in any convenient form, for example using dedicated hardware, or a mixture of dedicated hardware and software. The present invention may be implemented as computer software implemented by one or more networked processing apparatuses. The processing apparatuses can compromise any suitably programmed apparatuses such as a general purpose computer, personal digital assistant, mobile telephone (such as a WAP or 3G-compliant phone) and so on. Since the present invention can be implemented as software, each and every aspect of the present invention thus encompasses computer software implementable on a programmable device. The computer software can be provided to the programmable device using any conventional carrier medium (carrier means). The carrier medium can compromise a transient carrier medium such as an electrical, optical, microwave, acoustic or radio frequency signal carrying the computer code. An example of such a transient medium is a TCP/IP signal carrying computer code over an IP network, such as the Internet. The carrier medium can also comprise a storage medium for storing processor readable code such as a floppy disk, hard disk, CD ROM, magnetic tape device or solid state memory device.

## Claims

1. A client terminal (10) used by at least one user, the client terminal (10) comprising:
a storage device (130) configured to store at least one print job; and
a processor (11) configured to execute a service process (101) during when the client terminal (10) is operating regardless of a login state of the user, the service process (101) including:
a print job request receiver (113) configured to receive, from an output apparatus (20), a print job request requesting a print job; and
a print job sender (116) configured to send the output apparatus (20) the print job stored in the storage device (130) in response to the print job request received by the print job request receiver (113).

2. The client terminal (10) according to claim 1,
wherein the print job request includes first information used for authentication of the user and second information used for authentication of the output apparatus (20),
wherein the service process (101) further includes:
a first authentication controller (114) configured to use the first information included in the print job request received by the print job request receiver (113) to perform control for authenticating the user; and
a second authentication controller (115) configured to use the second information included in the print job request received by the print job request receiver (113) to perform control for authenticating the output apparatus (20), and
wherein the print job sender (116) sends the print job requested by the print job request when the user is authenticated by the first authentication controller (114) and the output apparatus (20) is authenticated by the second authentication controller (115).

3. The client terminal (10) according to claim 2,
wherein the first authentication controller (114) is configured to perform control for causing an authentication server (30) to authenticate the user, and
the second authentication controller (115) is configured to perform control for causing the authentication server (30) to authenticate the output apparatus (20).

4. The client terminal (10) according to claim 3,
wherein the first authentication controller (114) is configured to send the authentication server (30) a first authentication request including the first information and requesting the authentication of the user, and to receive an authentication result of the user from the authentication server (30) as a response to the first authentication request, and
the second authentication controller (115) is configured to send the authentication server (30) a second authentication request including the second information and requesting the authentication of the output apparatus (20), and to receive an authentication result of the output apparatus (20) from the authentication server (30) as a response to the second authentication request.

5. The client terminal (10) according to any one of claims 2 to 4,
wherein the first information is information acquired by encrypting user information identifying the user with a predetermined encryption key, and
the second information is information acquired by encrypting output apparatus information identifying the output apparatus (20) with a predetermined encryption key.

6. The client terminal (10) according to any one of claims 1 to 5,
wherein the processor (11) executes the service process (101) during when the client terminal (10) is operating when the login state of the user indicates the logoff state.

7. The client terminal (10) according to claim 6,
wherein the processor (11) executes at least one user process (102) when the login state of the user indicates the logon state.

8. An information processing method by a client terminal (10) used by at least one user, the information processing method comprising:
storing at least one print job in a storage device;
executing a service process (101) during when the client terminal (10) is operating regardless of a login state of the user to cause the service process (101) to perform:
receiving (S21), from an output apparatus (20), a print job request requesting a print job; and
sending (S28) the output apparatus (20) the print job stored in the storage device (130) in response to the print job request received in the receiving (S21).

9. A carrier means (12, 14, 13) carrying computer readable code for controlling a client terminal (10) to carry out the method of claim 8.
